# EUROPÄISCHE PATENTANMELDUNG

(11) **EP 2 537 996 A2**
(43) Veröffentlichungstag der Anmeldung: **26.12.2012**
(21) Anmeldenummer: 12172772.1
(22) Anmeldetag: 20.06.2012
(51) Int. Cl.: E04D 13/04, H01L 31/048

(54) **Dacheindeckung**

(30) Priorität: 20.06.2011 DE 102011105382; 19.12.2011 DE 202011052358 U
(71) Anmelder: Straß, Volker, 66629 Freisen-Oberkirchen (DE)
(72) Erfinder: Straß, Volker, 66629 Freisen-Oberkirchen (DE)
(74) Vertreter: Wieske, Thilo

(57) **Zusammenfassung**

Die Erfindung betrifft eine Dacheindeckung bestehend aus mehreren Flächenelementen, wobei die Flächenelemente entlang horizontaler Kanten aufeinanderliegen derart, dass die in Richtung der Dachschräge oben liegenden Flächenelemente im Bereich von deren unterer Kante auf den in Richtung der Dachschräge darunterliegenden Flächenelementen im Bereich von deren oberer Kante überlappend aufliegen, wobei die Flächenelemente entlang deren seitlicher Kanten nebeneinander liegen, wobei die Flächenelemente im Bereich ihrer seitlichen Kanten jeweils auf einer seitlichen Wand eines nach oben offenen Kanals aufliegen derart, dass der Kanal unterhalb des Zwischenraumes zwischen den seitlichen Kanten benachbarter Flächenelemente verläuft, wobei die Auflage der seitlichen Wände des nach oben offenen Kanals eine Silikondichtung aufweist.

## Beschreibung

Die Erfindung betrifft eine Dacheindeckung nach dem Oberbegriff des Anspruchs 1.

Derartige Dacheindeckungen sind bereits bekannt. Die Flächenelemente sind typischerweise Photovoltaikanlagen. Mit diesen Anlagen wird die Dachfläche genutzt, indem über die Photovoltaikelemente aus dem Licht Strom produziert wird. Dazu ist es bekannt, die Photovoltaikelemente als Flächenelemente auf dem Dach zu befestigen. In diesem Zusammenhang ist es bekannt, bei Dächern mit üblichen Dacheindeckungen wie Dachziegeln, Dachpfannen o.ä. unterhalb einzelner dieser Dachpfannen Befestigungselemente in den tragenden Hölzern des Daches zu befestigen, um die Flächenelemente dann an diesen Befestigungselementen festzumachen. Die Flächenelemente haben dabei einen gewissen Abstand zur Dacheindeckung. Ebenso sind sogenannte Indachsysteme bekannt, bei denen die übliche Dacheindeckung zumindest teilweise durch Flächenelemente ersetzt wird. Typischerweise werden dabei die Flächenelemente in das Dach integriert wie dies aus Fenstern in der Dachschräge bekannt ist. Diese Rahmen werden gegenüber der benachbarten Dacheindeckung abgedichtet. Die Photovoltaikelemente werden dann in den Rahmen eingesetzt.

Der vorliegenden Erfindung liegt die Aufgabe zu Grunde, eine Dacheindeckung vorzuschlagen, bei der eine Dacheindeckung mittels Flächenelementen vorgenommen werden kann, wobei diese Dacheindeckung einfach in der Ausführung und Handhabung sein soll und gleichzeitig eine gute Dichtigkeit gegen eindringende Feuchtigkeit gewährleisten soll.

Dazu wird die Dacheindeckung derart ausgestaltet, dass diese aus mehreren Flächenelementen besteht, die entlang horizontaler Kanten aufeinanderliegen derart, dass die in Richtung der Dachschräge oben liegenden Flächenelemente im Bereich von deren unterer Kante auf den in Richtung der Dachschräge darunterliegenden Flächenelementen im Bereich von deren oberer Kante überlappend aufliegen, wobei die Flächenelemente entlang deren seitlicher Kanten nebeneinander liegen. Dies ist insoweit beispielsweise auch aus Dacheindeckungen bekannt, die als Biberschwanzziegel bekannt sind. Diese Biberschwanzziegel werden schuppenförmig übereinander gelegt. Dabei werden diese Ziegel weiterhin von einer Lage zur nächsten seitlich versetzt gelegt, so dass die seitlichen Stoßkanten benachbarter Ziegel wiederum von den Ziegeln der nächsten Reihe überdeckt werden. Durch dieses Überlappen der Biberschwanzziegel ergibt sich eine dichte Dacheindeckung.

Nach der vorliegenden Erfindung soll die Dacheindeckung aber so ausgestaltet sein, dass die Dacheindeckung durch Flächenelemente deutlich größeren Ausmaßes gebildet werden kann, wie dies beispielsweise bei großflächigen Photovoltaikelementen der Fall ist, die auf Verbundglas-Sicherheitsscheiben aufgebracht werden. Die einzelnen Flächenelemente können dabei eine Größe von mehreren m² aufweisen.

Dazu ist erfindungsgemäß die Dacheindeckung derart ausgestaltet, dass die Flächenelemente im Bereich ihrer seitlichen Kanten jeweils auf einer seitlichen Wand eines nach oben offenen Kanals aufliegen derart, dass der Kanal unterhalb des Zwischenraumes zwischen den seitlichen Kanten benachbarter Flächenelemente verläuft, wobei die Auflage der seitlichen Wände des nach oben offenen Kanals eine Silikondichtung aufweist.

Vorteilhaft kann durch diese Ausgestaltung der Dacheindeckung mit dem Kanal kein Wasser zwischen den Flächenelemente durch die Dacheindeckung dringen, weil das Wasser über den Kanal nach unten abgeführt wird. Selbst bei stärkeren Regenfällen und einem entsprechend stark gefüllten Kanal bewirkt die Silikondichtung auf der oberen Kante der seitlichen Wände des nach oben offenen Kanals, dass das Wasser nicht zwischen dieser oberen Kante der seitlichen Wand des Kanals und dem aufliegenden Flächenelement unter das Flächenelement dringen kann. Ein Überlaufen des Kanals wird bei dieser Ausgestaltung erfolgen, indem das Wasser zwischen den benachbarten Flächenelementen nach oben heraustritt und auf der Oberfläche der Flächenelemente nach unten abläuft.

Die Kanäle sind in einem seitlichen Abstand entsprechend der Breite der Flächenelemente auf der Dachkonstruktion angebracht.

Dabei hat es sich noch als besonders vorteilhafte Ausgestaltung erwiesen, die Kanäle auf Kanthölzern anzubringen, deren Oberseite und Unterseite schräg zueinander verlaufen. Dadurch lassen sich vorteilhaft die Flächenelemente in einem Neigungswinkel anbringen, der unterschiedlich ist zu dem Dachneigungswinkel. Dies erweist sich insofern als vorteilhaft, als die bauseitigen Gegebenheiten der Dachneigung für die Schrägstellung der Photovoltaikelemente kompensiert werden können. Dadurch lassen sich die Photovoltaikelemente so anbringen, dass diese mit einem guten Wirkungsgrad arbeiten können und insbesondere nicht zu flach bzw. zu steil stehen.

Weiterhin erweist es sich als vorteilhaft, wenn die seitlichen Wände des Kanals als Mehrfachwände, insbesondere Doppelwände ausgebildet sind. Dadurch wird es möglich, die Silikondichtung mit einem Fußelement zu versehen, dass zwischen diese Mehrfachwände geklemmt wird. An diesem Fußelement ist dann ein Oberteil der Silikondichtung angebracht, das die Oberkanten der Mehrfachwände abdeckt. Dadurch wird die Silikondichtung besonders effektiv gegenüber Scherkräften gehalten.

Die Silikondichtung weist vorteilhaft in Längsrichtung zumindest eine, bevorzugt mehrere Rillen auf. Sofern Wasser eventuell in die Dichtung eindringt, wird dieses nochmals durch die Rillen geführt. Ein Eindringen von Wasser wird dadurch vorteilhaft verhindert. Vorteilhaft ist es weiterhin, wenn zumindest an den seitlichen Oberkanten der Silikondichtung eine Dichtlippe angebracht ist, die eng an dem Flächenelement anliegt.

Bei der Ausgestaltung des Kanals, bei dem die Flächenelemente auf der Oberkante der Seitenwände aufliegen, erweist es sich auch als vorteilhaft, dass im seitlichen Randbereich der Dacheindeckung auch eine Verwendung möglich ist, bei der das Flächenelement vom seitlichen Rand weg versetzt in der Mitte gestützt wird. Dabei liegt dann das Flächenelement auf beiden Seitenwänden des Kanals auf und überdeckt diesen Kanal. Dadurch wird es vorteilhaft möglich, eine Dacheindeckung zu realisieren, die einen seitlichen Überstand aufweist. Dabei wird das Flächenelement im Randbereich im Bereich seiner seitlichen Kante, die im inneren Bereich des Daches liegt, gestützt wie beschrieben. Ein weiterer Kanal liegt im Randbereich der Dachkonstruktion und wird von einem Flächenelement überdeckt, das seitlich über den Rand der Dachkonstruktion hinausragt. Dies erweist sich insofern als vorteilhaft, als durch den Überstand ein Schutz der Dachkonstruktion gegenüber seitlich einfallendem Schlagregen erreicht wird. Außerdem wird es dadurch nicht notwendig, die Flächenelemente im Randbereich in der Breite anzupassen an die verbleibende Breite der Dachkonstruktion. Da sich die flächigen Photovoltaikelemente in der Breite nicht kürzen lassen, ohne dass diese hinsichtlich der Photovoltaikfunktion zerstört werden, wäre es bei einer notwendigen Anpassung der Breite der Flächenelemente notwendig, den Randbereich mit Flächenelementen ohne Photovoltaikfunktion auszustatten. Dadurch ginge wiederum nutzbare Fläche für die Energiegewinnung verloren.

Es ist dabei nicht notwendig, dass in Längsrichtung die Kanäle unterhalb der seitlichen Ränder der Flächenelemente fluchtend in einer Reihe liegen. Dadurch, dass die Flächenelemente schuppenförmig übereinander liegen, kann Wasser, das durch einen der Kanäle abläuft, auch über die Austrittsöffnung am unteren Ende des Kanals über die Fläche des darunter befindlichen Flächenelementes ablaufen. Gerade bei größeren Dachlängen erweist sich dies als vorteilhaft, weil die Länge der Kanäle begrenzt ist und sich hin zu dem unteren Ende des Daches nicht die Situation gibt, dass dort das Wasser abgeführt werden muss, das über die volle Länge des Daches in dem Kanal gesammelt wurde.

Dadurch, dass die Flächenelemente seitlich gegeneinander versetzt sein können, werden auch die nutzbaren Flächen größer, die sich ergeben, wenn die Dacheindeckung nicht in einer zusammenhängenden Fläche durchgeführt werden kann. Dies kann beispielsweise der Fall sein, wenn Schornsteine vorhanden sind oder wenn in dem Dach Gaupen vorhanden sind. Vorteilhaft können dann in einer Systemlösung der Dacheindeckung Flächenelemente verschiedener Breiten vorgehalten werden. Dadurch wird es möglich, größere Flächenbereiche für die solare Energiegewinnung nutzbar zu halten, indem die Dacheindeckung mit Flächenelementen geringerer Breite an den Schornstein bzw. die Gaupe herangelegt wird.

Abhängig von der Größe der Flächenelemente können diese noch in Längsrichtung des Kanals an einzelnen Positionen zusätzlich befestigt werden. Dadurch können T-förmige Elemente beispielsweise durch Verschrauben mit dem Boden des Kanals verbunden werden. Die beiden seitlichen Ausleger des "T" überragen dabei jeweils ein angrenzendes Flächenelement, so dass diese Flächenelemente dadurch entlang der Seitenkanten der Flächenelemente zusätzlich auf die Oberkante der Seitenwand des jeweiligen Kanals aufgedrückt werden.

Bei der Ausgestaltung nach Anspruch 2 weist der Kanal an seinem unteren Austrittsende ein horizontal verlaufendes Anliegeprofil mit einer Aufnahme für die Unterkante der Flächenelemente auf, wobei die Aufnahme eine Silikondichtung aufweist und wobei das Anliegeprofil im Bereich des Kanalquerschnitts offen ist.

Durch dieses Anliegeprofil werden die Flächenelemente mechanisch gehalten. Durch die Silikonabdichtung wird vorteilhaft verhindert, dass an dieser Stelle Wasser eindringen kann.

Das Anliegeprofil umgreift dabei vorteilhaft die Unterkante des Flächenelementes U-förmig. Die Oberseite des Flächenelementes wird vorteilhaft mit einer Silikondichtung abgedichtet, die schräg ausläuft. Über diese Schräge wird über das Flächenelement ablaufendes Wasser vorteilhaft über das Anliegeprofil hinweg geführt. Das Flächenelement kann auch eine Silikondichtung aufweisen für die untere Fläche des Flächenelementes im Bereich von deren unterer Kante. Vorteilhaft ist diese Silikondichtung in ihrer Dicke so bemessen, dass die Oberfläche der Silikondichtung mit der Oberfläche der Silikondichtung der seitlichen Wände des Kanals abschließt, so dass sich in der Höhe eine einheitliche Auflage für das Flächenelement ergibt. Hierbei erweist sich weiterhin die Ausgestaltung wenigstens einer der Silikondichtungen mit einer Dichtlippe als vorteilhaft, weil dadurch bei eingelegtem Flächenelement eine gute Abdichtung erreicht wird.

Vorteilhaft ist auch bei dieser Silikondichtung für die Unterseite des Flächenelementes wieder wenigstens eine Rille in Längsrichtung der Dichtung vorgesehen, um das Eindringen von Wasser zu verhindern.

Bei der Ausgestaltung nach Anspruch 3 sind im Bereich der horizontal verlaufenden oberen Kanten auf der Oberseite der Flächenelemente Dichtelemente aus Silikon angebracht, die rohr- oder stangenförmig ausgebildet sind und innen hohl sind.

Durch diese Ausgestaltung der Dichtungen ergibt sich vorteilhaft beim Auflegen des oberen Flächenelementes durch die Gewichtskraft eine entsprechende Verformung des Dichtelementes, so dass eine gute Abdichtung erreicht wird. Eine Abdichtung in diesem Bereich ist ohnehin nur für die Fälle erforderlich, bei denen bei starkem Wind eventuell Regenwasser das Dach hinauf gedrückt wird. Für diese Fälle ergibt sich eine ausreichende Abdichtung durch das beschriebene Dichtelement.

Durch die Ausbildung dieser Dichtelemente als innen hohle Elemente ergibt sich vorteilhaft die Dichtwirkung über einen vergleichsweise weit gehenden Bereich der Verformung. Damit können vorteilhaft Toleranzen ausgeglichen werden, die sich bauseits bedingt hinsichtlich der Lage der Kanäle in der Höhe ergeben können.

Dabei erweist es sich als vorteilhaft, wenn der Hohlraum in dem Dichtelement nach dem Auflegen der Flächenelemente zumindest punktweise ausgespritzt wird. Dies kann mit Silikon erfolgen. Nach dem Auflegen der Flächenelemente wird die äußere Wand des Hohlraums mit der Spitze einer Spritze durchstoßen und anschließend mit Silikon ausgefüllt. Dies erweist sich insbesondere als vorteilhaft bei Flächenelementen, die eine größere Breite aufweisen. Dies ist beispielsweise bei flächigen Photovoltaiksystemen der Fall, die Breiten von 1m und mehr aufweisen. Dabei erweist es sich als vorteilhaft, wenn das Gewicht dieser Flächenelemente auch im Bereich der unteren Kante nochmals gelagert wird, indem das Dichtelement ausgespritzt wird und damit das Flächenelement an der entsprechenden Stelle stützt.

Bei der Dacheindeckung nach Anspruch 4 verläuft parallel zu dem rohr- oder stangenförmigen Dichtelement ein nach oben offener Kanal.

Dieser Kanal verläuft unterhalb des oberen Flächenelementes in dem Bereich, der durch das Dichtelement abgedichtet ist. Vorteilhaft verläuft dieser Kanal durchgehend von Ortgang zu Ortgang.

Durch diesen Kanal kann vorteilhaft Kondenswasser gesammelt werden, das sich auf der Unterseite der Flächenelemente niederschlägt. Sofern dieses Kondenswasser an der Unterseite der Flächenelemente nach unten abläuft, wird dieses Kondenswasser in dem Kanal gesammelt.

Soweit die Dichtelemente über die volle Dachbreite von Ortgang zur Ortgang durchlaufen, kann das Kondenswasser dann an einem dieser Ortgänge durch einen Auslass abfließen. Der

Kanal verläuft dann unterhalb des nach oben offenen Kanals, auf dem die Flächenelemente im Bereich ihrer seitlichen Kanten aufliegen. Dadurch kann der im Zusammenhang mit Anspruch 4 angesprochene nach oben offene Kanal von Ortgang zu Ortgang durchlaufen, ohne dass sich bei Starkregen Wasser in diesen Kanal hineindrücken kann.

Sofern in dem Kanal so wenig Wasser ist, dass dieses noch nicht in Richtung des Ortganges fließt, wird das Wasser durch die Konvektion der Luft oberhalb der semipermeablen Folie über der Wärmedämmung des Daches wieder verdunstet und mitgenommen.

Ebenso wie das Kondenswasser kann über diesen Kanal auch Wasser abgeführt werden, das sich unter ungünstigen Umständen eventuell doch durch das Dichtelement durchdrücken kann bei starkem Regen und ungünstigen Windverhältnissen.

Bei der Ausgestaltung nach Anspruch 5 weisen die Dichtelemente im Bereich der Auflage eines darüber liegenden Flächenelementes wenigstens eine Rille in Längsrichtung des Dichtelementes auf.

Dadurch wird die Dichtwirkung verbessert.

Bei der Ausgestaltung nach Anspruch 6 weisen die Dichtelemente in ihrem Inneren wenigstens eine zwischen zwei Linien auf der inneren Oberfläche des Dichtelementes verlaufende Stabilisierungstraverse auf, wobei sich die beiden Linien zumindest im Wesentlichen in Längsrichtung des Dichtelementes erstrecken.

Dadurch wird vorteilhaft erreicht, dass durch das Auflegen des oberen Flächenelementes eine weitgehend gleichmäßige Verformung des Dichtelementes erreicht wird und kein seitliches Wegscheren des Dichtelementes in eine Richtung.

Bei der Ausgestaltung nach Anspruch 7 ist das Dichtelement auf der Außenseite eines Schenkels eines U-förmigen Profils angebracht, wobei dieses Profils ebenfalls aus Silikon besteht und wobei das U-förmige Profil das Flächenelement an seiner oberen horizontal verlaufenden Kante umgreift.

Dadurch wird dieses Dichtelement vorteilhaft einfach herstellbar. Außerdem lässt sich dieses Dichtelement einfach aufbringen. Damit ist die Montage der Dacheindeckung wiederum erheblich vereinfacht.

Bei der Ausgestaltung nach Anspruch 8 ist der nach oben offene Kanal an das U-förmige Profil angebracht. Der nach oben offene Kanal wurde im Zusammenhang mit Anspruch 4 beschrieben.

Dadurch ist der Kanal vorteilhaft einstückig mit dem Dichtelement ausgebildet und kann in einfacher Weise mit dem Dichtsystem montiert werden.

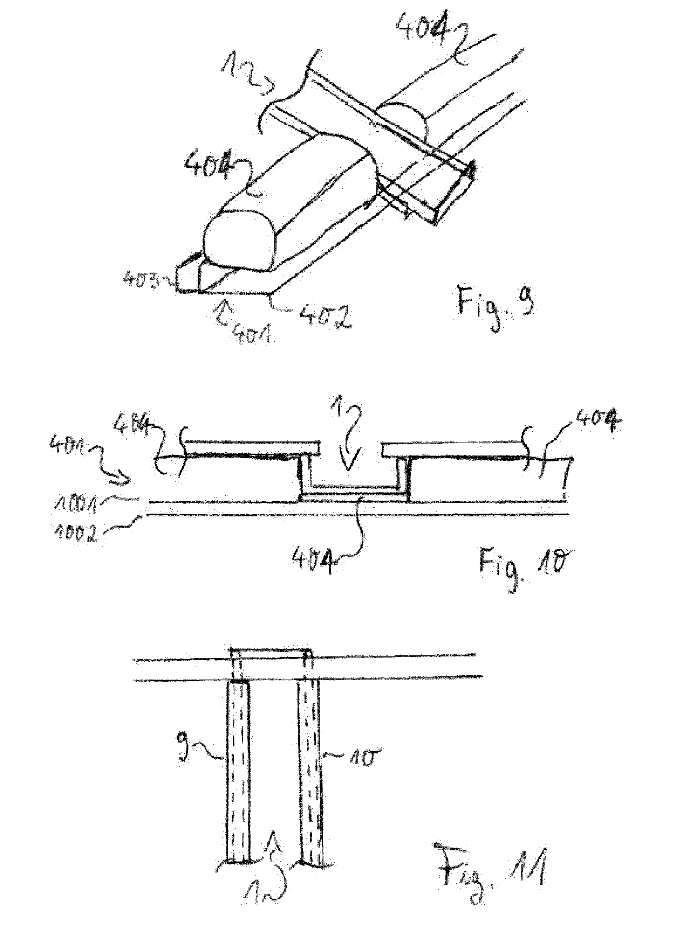

Bei der Ausgestaltung nach den Ansprüchen 7 und 8 kann das Dichtelement vorteilhaft in dem Bereich ausgeklinkt werden, in dem der in Anspruch 1 angesprochene nach oben offene Kanal auf dem Dichtelement aufliegt. Das Ausklinken erfolgt dabei vorteilhaft lediglich derart, dass das rohr- oder stangenförmige Element des Dichtelements entsprechend der Breite des nach oben offenen Kanals nach Anspruch 1 ausgeklinkt wird. Das bedeutet, dass das rohr- oder stangenförmige Element mit geringfügig geringerer Breite eingeschnitten wird, als dies der Breite des nach oben offenen Kanals nach Anspruch 1 entspricht. Dadurch liegt das rohr- oder stangenförmige Element des Dichtelements dicht an den Außenwänden dieses Kanals an. Das U-förmige Profil und der in den Ansprüchen 4 und 8 angesprochene nach oben offene Kanal laufen dabei vorteilhaft von Ortgang zu Ortgang durch. Dadurch kann Kondenswasser, das in diesem Kanal gesammelt wird, vorteilhaft an einem Auslass im Ortgang abgeführt werden. Das U-förmige Profil sowie der daran angebrachte nach oben offene Kanal nach den Ansprüchen 4 und 8 verlaufen dabei unterhalb des nach oben offenen Kanals nach Anspruch 1. Das Ausklinken bedeutet dabei nicht, dass das rohr- oder stangenförmige Dichtelement ausgeschnitten wird sondern lediglich, dass dieses Dichtelement entsprechend der Breite des Profils und Kanals nach Anspruch 1 eingeschnitten wird. Diese Verhältnisse sind im Zusammenhang mit den Figuren 9 und 10 nochmals erörtert.

Insgesamt erweist es sich bei der in den verschiedenen Details beschriebenen Dacheindeckung als vorteilhaft, dass die Teile nach Art eines Stecksystems miteinander verbunden werden. Insbesondere ist es nicht notwendig, zur Abdichtung Teile miteinander zu verkleben. Dies ist insofern vorteilhaft, als bei dieser Ausgestaltung bei einem Defekt einzelner Photovoltaikelemente diese separat gewechselt werden können.

Durch die vorstehend und nachstehend im Zusammenhang mit den Zeichnungen erläuterten Bauteile ergibt sich insgesamt ein einfach handhabbares System, das eine gute Dichtigkeit gewährleistet. Vorteilhaft ist dabei auch, dass Einzelelemente nachträglich mit vertretbarem Aufwand ausgetauscht werden können.

Ein Ausführungsbeispiel der Erfindung ist in der Zeichnung dargestellt. Es zeigt dabei:
Fig. 1: ein Profil mit einem Kanal sowie Dichtungen,
Fig. 2: ein Anliegeprofil,
Fig. 3: ein Lagerelement für das Profil nach Figur 1,
Fig. 4: ein Dichtelement,
Fig. 5: eine Darstellung der Wirkungsweise des Dichtelements nach Figur 4,
Fig. 6: eine Darstellung der Wirkungsweise der Abdichtung des Anliegeprofils nach Figur 2,
Fig.7: eine Darstellung der Montage der Dacheindeckung auf Kanthölzern mit unterschiedlicher Neigung der Kanten,
Fig.8: eine Prinzipdarstellung einer Dacheindeckung mit Flächenelementen
   unterschiedlicher Breite,
Fig. 9: ein Dichtelement nach Figur 4 mit einem Einschnitt an der Position eines
   einliegenden Profils in einer Draufsicht von schräg oben,
Fig. 10: die Darstellung nach Figur 9 in einer Draufsicht von vorne auf das Profil,
Fig. 11: die Anbindung des Dichtelements nach Figur 4 an die Silikondichtungen nach Figur 1,
Fig. 12 eine alternative Ausgestaltung der Silikondichtungen 9 und 10 in der Darstellung der Figur 1.

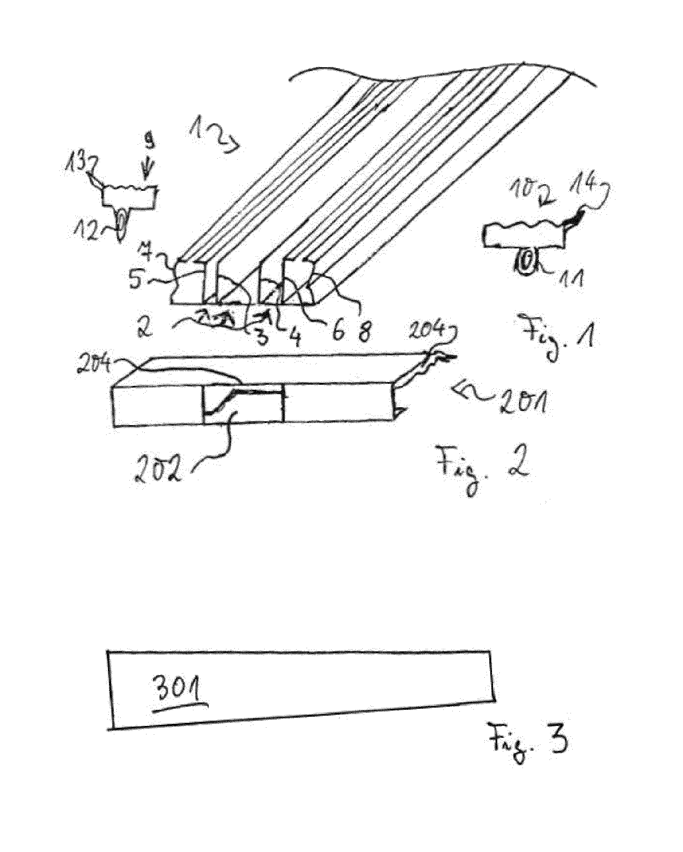

Figur 1 zeigt ein Profil 1 mit einem Kanal 2. Im Inneren dieses Kanals 2 sind nochmals zwei Trennwände 3 und 4 zu sehen. Der Kanal 2 wird durch die Wände 5 und 6 begrenzt.

Zu diesen Wänden 5 und 6 sind nochmals äußere Wände 7 und 8 vorhanden, so dass die Wände 5 und 6 mit den jeweils zugehörigen äußeren Wänden 7 und 8 Doppelwände bilden, zwischen denen jeweils ein Hohlraum entsteht.

Es sind weiterhin Silikondichtungen 9 und 10 zu sehen, die an ihrer Unterseite jeweils eine rohrförmige Befestigung 11 und 12 aufweisen. Die Silikondichtungen 9 und 10 werden jeweils befestigt, indem die rohrförmigen Befestigungen 11 und 12 in den zugehörigen Zwischenraum zwischen den Wänden 6 und 8 sowie 5 und 7 gedrückt werden.

Das Oberteil der Silikondichtungen 9 und 10 liegt dann auf den Wänden 5 und 6 sowie den jeweils zugehörigen äußeren Wänden 5 und 7 sowie 6 und 8 auf.

Dabei ist zu sehen, dass die Silikondichtungen 9 und 10 auf ihrer Oberseite in Längsrichtung mehrere Rillen aufweisen. Bei einem aufliegenden Flächenelement der Dacheindeckung wird dadurch eine gute Dichtigkeit erreicht und das Eindringen von Wasser vermieden.

Weiterhin ist zu sehen, dass die Silikondichtungen 9 und 10 an ihrer Außenseite jeweils Dichtlippen 13 und 14 aufweisen. Selbst wenn das Profil 2 bei der Montage wegen bauseitiger Toleranzen in Längsrichtung eventuell gekrümmt sein sollte, ergibt sich durch die Dichtlippen dennoch eine hinreichende Abdichtung gegen eindringendes Wasser, weil sich die Dichtlippe abdichtend an die Unterseite des Flächenelementes anlegt und dadurch die angesprochenen Toleranzen (bauseits oder ggf. auch bei einer Krümmung des Flächenelementes) ausgleicht.

Es ist dabei auch eine Gestaltung der Silikondichtungen 8 und 10 möglich, bei der auch an der jeweils zum Kanal 2 liegenden Kanten der Silikondichtungen 8 und 10 jeweils eine Dichtlippe angeordnet ist.

Figur 2 zeigt ein Anliegeprofil 201, das an dem unteren Abschluss des Profils 1 angebracht wird. Dieses Anliegeprofil 201 weist eine Öffnung 202 auf, die in ihrer Größe und Position dem Querschnitt des Kanals 2 des Profils 1 entspricht. Dadurch kann Regenwasser über den Kanal2 durch die Öffnung 202 in dem Anliegeprofil 201 aus dem Kanal 2 herauslaufen.

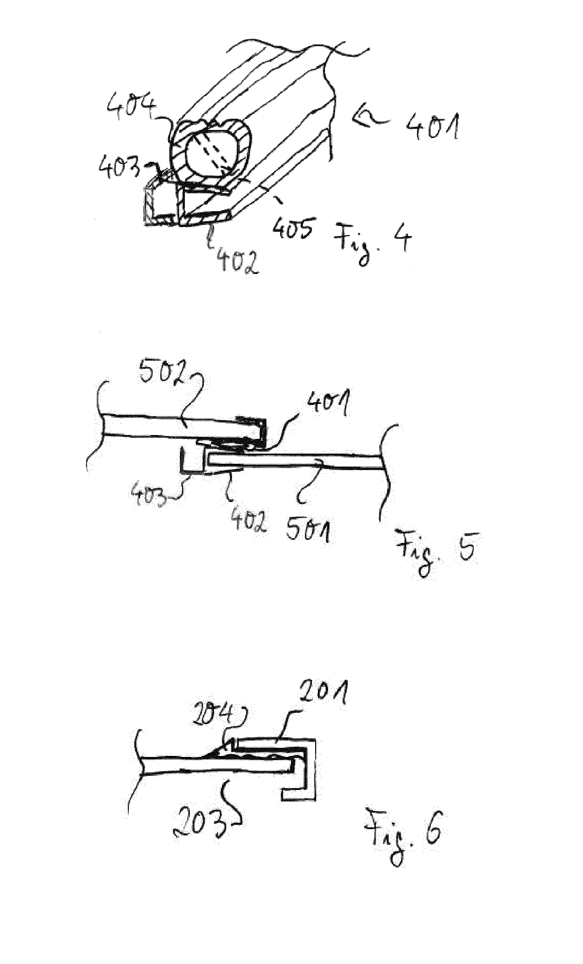

In dem Anliegeprofil 201 ist der untere Schenkels des U-förmigen Profils kürzer als der obere Schenkel des U-förmigen Profils. Bei der schuppenförmig Lagerung der Flächenelemente ergibt sich dadurch eine gute Abdichtung, weil damit die Unterseite des Flächenelementes im Bereich von dessen unterer horizontaler Kante auf dem Dichtelement aufliegt, das in Figur 4 dargestellt ist.

In Verbindung mit den Dichtlippen 13 und 14 der Silikondichtungen 9 und 10 ergibt sich damit insgesamt eine gute Abdichtung des Flächenelementes gegen eindringendes Wasser und eindringende Feuchtigkeit.

Das Anliegeprofil 201 ist an der Innenseite des oberen Schenkels des U-förmigen Profils mit einer Silikondichtung 204 gegenüber der Oberfläche des Flächenelementes abgedichtet. Auch diese Dichtung weist mehrere Rillen in Längsrichtung auf. Diese Silikondichtung 204 geht durch und ist nicht unterbrochen im Bereich des Kanals 2. Diese Silikondichtung 204 ist in ihrem Verlauf nach außen hin abgeschrägt. Dadurch ergibt sich eine Ablauffläche für das Wasser, das auf dem Flächenelement herunter läuft. Dieses läuft dann weiter über die abgeschrägte Silikondichtung 204 über das Anliegeprofil 201 hinweg.

Diese Verhältnisse sind nochmals in Figur 6 dargestellt. Die Silikondichtung 204 weist vorteilhaft nicht nur eine Abschrägung auf sondern stößt noch bündig an der vorderen Kante des oberen Schenkels des U-förmigen Profils an. Dadurch wird das Ablaufen des Wassers nochmals verbessert.

Figur 3 zeigt ein Lagerelement 301 für das Profil nach Figur 1 in einem seitlichen Querschnitt. Bei einem Auflegen dieses Lagerelementes 301 auf die Tragkonstruktion des Daches lässt sich wegen der Neigung der oberen Fläche des Lagerelementes 301 gegenüber der unteren Fläche die Neigung des Flächenelementes der Dacheindeckung gegenüber der bauseitig vorgegebenen Dachneigung verändern.

Figur 4 zeigt ein Dichtelement 401 zur Abdichtung der horizontalen Kanten der Flächenelemente der Dacheindeckung. Dieses Dichtelement 401 besteht ebenfalls aus Silikon. Das Dichtelement 401 weist ein U-förmiges Profil 402 auf. Mit diesem Profil wird die obere horizontale Kante eines Flächenelementes umgriffen, so dass die rohrförmige Dichtung 404 auf der Oberseite des Flächenelementes liegt. Dazu ist die rohrförmige Dichtung 404 auf der Oberseite des oberen Schenkels des U-förmigen Profils 402 angebracht. In dem dargestellten Ausführungsbeispiel ist diese Dichtung 404 rohrförmig, d.h. innen hohl. Es ist zu sehen, dass auf der Oberseite der Dichtung 404 mehrere Rillen in Längsrichtung verlaufen.

Ebenso ist zu sehen, dass an dem U-förmigen Profil 402 ein nach oben offener Kanal 403 angebracht ist. Wie im Zusammenhang mit den Ansprüchen 4 und 8 beschrieben, kann über diesen Kanal Kondenswasser abgeführt werden sowie auch eventuell bei extrem ungünstigen Witterungsverhältnissen eingedrungenes Wasser. Es ist dabei vorteilhaft, wenn dieser Kanal 403 einstückig an das U-förmige Profil 402 angebracht ist. Dadurch wird die Herstellung in einfacher Weise möglich. Außerdem ist damit der Kanal 403 in einfacher Weise zusammen mit dem Dichtelement 401 montierbar.

Weiterhin ist zu sehen, dass im Inneren des rohrförmigen Hohlraums der Dichtung 404 noch eine Stabilisierungstraverse 405 verlaufen kann. Mit dieser Stabilisierungstravers 405 soll verhindert werden, dass bei einem Auftreten von Scherkräften die Dichtung 404 komplett zur Seite gedrückt wird. Im optimalen Fall wird die Dichtung 404 von oben mit Gewicht belastet und verformt sich gleichmäßig. Dadurch lässt sich eine gute Abdichtung erzielen.

Vorteilhaft endet dieses Dichtelement 401 nicht an der Kante eines Flächenelementes sondern verläuft über die Abstände zwischen den Flächenelementen hinweg und umgreift wiederum am nächsten anschließenden Flächenelement die Oberkante. In diesem Fall läuft dann auch der nach oben offene Kanal 403 durch und kann damit von Ortgang zu Ortgang geführt werden. In dem Kanal 403 gesammeltes Kondenswasser kann dann vorteilhaft an einem Auslass des Ortgangs abgeführt werden.

Figur 5 zeigt die Wirkungsweise des Dichtelements 401 in einem seitlichen Schnitt. Dieses Dichtelement 401 ist an der oberen horizontalen Kante eines Flächenelementes 501 angebracht mit einem U-förmigen Profil 402. Die Dichtung 404 liegt dabei auf der Oberseite dieses Flächenelementes 501. Diese obere Kante des Flächenelementes 501 wird überdeckt von der unteren Kante eines darüber liegenden Flächenelementes 502. Durch die Gewichtskraft des aufliegenden Flächenelementes 502 wird die Dichtung 404 verformt, so dass die beiden Flächenelemente 501 und 502 in horizontaler Richtung gegeneinander abgedichtet sind. Dabei liegt das Dichtelement 401 direkt unterhalb des Flächenelementes 502, das heißt hinter dem unteren Schenkel des Anliegeprofils, das die Unterkante der unteren Kante des Flächenelementes 502 umgibt.

Es ist zu sehen, dass der nach oben offene Kanal 403 unterhalb des aufliegenden Flächenelementes 502 horizontal verläuft. Dadurch kann das Kondenswasser in dem Kanal 403 gesammelt werden, das an der Unterseite des Flächenelementes 502 nach unten läuft. An dem Dichtelement 401 kann dieses Kondenswasser nicht mehr weiter laufen und wird bei der dargestellten Ausführungsform vorteilhaft in dem Kanal 403 gesammelt.

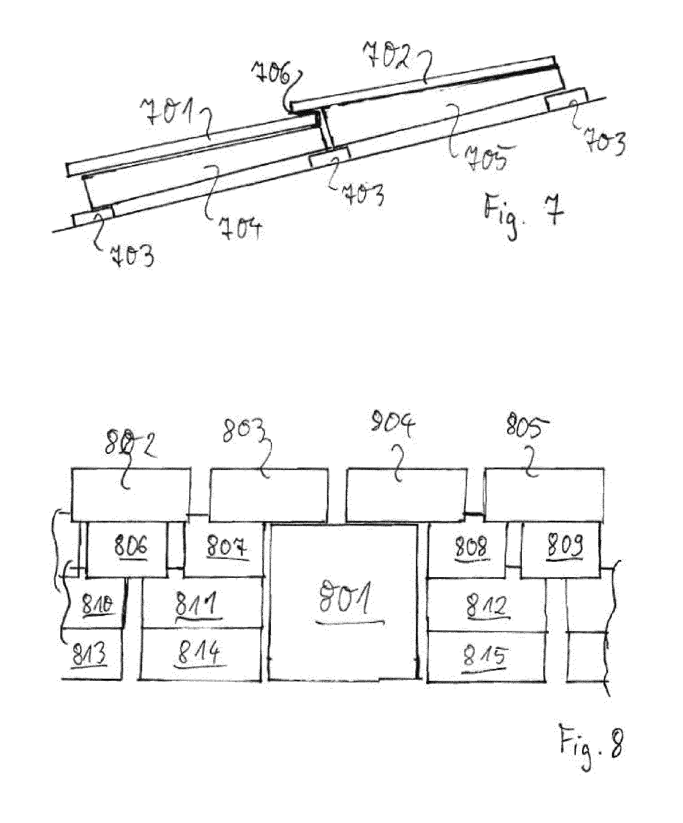

Figur 7 zeigt in einem seitlichen Schnitt die montierten Flächenelemente 701 und 702. Es sind in horizontaler Richtung verlaufende Latten der Dachkonstruktion zu sehen, auf denen die Kanthölzer 704 und 705 aufgebracht werden. Die obere Auflagefläche der Kanthölzer 704, 705 ist gegenüber der unteren Fläche geneigt, mit der die Kanthölzer 704 und 705 auf den Latten 703 aufliegen. Es ist zu sehen, dass dadurch die Flächenelemente 701, 702 eine andere Neigung aufweisen als dies der Dachneigung entspricht. Vorteilhaft lässt sich damit der Wirkungsgrad der solaren Energiegewinnung verbessern. Mit der Bezugsziffer 706 ist ein Dichtelement nach Figur 4 bezeichnet, bei dem aus Gründen der Übersichtlichkeit Details wie das U-förmige Profil, der nach oben offene Kanal sowie das rohr- oder stangenförmige Element nicht im Einzelnen zu sehen sind.

Figur 8 zeigt eine Dacheindeckung in senkrechter Draufsicht. Mit der Bezugsziffer 801 ist ein Schornstein bezeichnet. Es sind verschiedene Flächenelemente 802 bis 815 dargestellt. Dabei ist zu sehen, dass die Flächenelemente 806, 807, 808. 809 gegenüber den anderen Flächenelementen eine geringere Breite aufweisen. Aus der Konstruktion ergibt sich, dass durch den Versatz der Kanäle das Wasser über die Flächenelemente abläuft. Durch diese unterschiedliche Breite der Flächenelemente können vorteilhaft auch Dacheindeckungen an einen Schornstein oder beispielsweise eine Gaupe herangelegt werden. Es lässt sich also eine Verlegung der Flächenelemente im wilden Verbund realisieren, bei dem die Kanäle nicht übereinander liegend und miteinander fluchtend angeordnet sind.

Sofern die Kanäle fluchtend übereinander angeordnet sind, erweist es sich als vorteilhaft, wenn an der unteren Kante der Kanthölzer in dem Bereich, in dem der Kanal anstößt, der an dem darunter befindlichen Kantholz angeordnet ist, ein Dichtelement angeordnet ist. Durch dieses Dichtelement wird verhindert, dass Regenwasser durch starken Wind nach oben aus dem Kanal herausgedrückt werden kann. Ein solches Dichtelement kann beispielsweise Moosgummi sein oder aus Silikon bestehen. Es ist aber auch möglich, Anschlussstücke für die Kanäle vorzusehen, die an deren oberem Ende mit einer Clip-Verbindung angebracht werden können. Damit können die einzelnen Kanäle jeder für sich an seiner oberen Kante abgedichtet werden. Dies ist besonders vorteilhaft bei einer Verlegung im wilden Verbund, bei dem eine Abdichtung durch ein darüber befindliches Kantholz nicht gegeben ist.

Figur 9 zeigt ein Dichtelement 401 nach Figur 4 mit einem Einschnitt an der Position eines einliegenden Profils 1 in einer Draufsicht von schräg oben. Der Einschnitt in das Dichtelement 401 erfolgt vorteilhaft mit einer Breite, die etwas geringer ist als die Breite des Profils 1. Der Einschnitt betrifft die rohrförmige Dichtung 404 des Dichtelements 401. Beim Einlegen des Profils 1 in den Ausschnitt schließen dann vorteilhaft die seitlichen Kanten der rohrförmigen Dichtung 404 dicht gegen die äußeren Wände des Profils 1 ab. Die rohrförmige Dichtung 404 wird in dem Bereich des Einschnitts entsprechend stärker zusammengedrückt, weil das Profil 1 sich weiter nach unten erstreckt als die Unterseite der Fläche des Flächenelementes. Das Flächenelement liegt mit seiner Unterseite auf der rohrförmigen Dichtung 404 in dem Bereich auf, in dem diese seitlich neben dem Profils 1 verläuft. Dort wird die rohrförmige Dichtung 404 so verformt, dass diese das Flächenelement an dessen Unterseite abdichtet.

Ebenso ist dort der nach oben offene Kanal 403 zu sehen, der an dem U-förmigen Profil 402 angebracht ist. Es ist zu sehen, dass das U-förmige Profil 402 sowie der nach oben offene Kanal 403 unter dem Profil 1 durchlaufen. Das Ausklinken zum Einpassen des Kanals 1 betrifft nur die rohrförmige Dichtung 404. Das Ausklinken bedeutet also nicht, dass das rohrförmige Profil 404 in der entsprechenden Breite ausgeschnitten wird. Vielmehr erfolgt seitlich entsprechend der Breite ein Einschnitt in das rohrförmige Profil 404, so dass diese in der Breite dieses Einschnitts stärker zusammengedrückt werden kann als im übrigen Bereich, ohne dass sich das rohrförmige Profile 404 im Übergangsbereich verformt und deswegen dort eventuell schlechter abdichtet.

In Figur 10 ist die Anordnung nach Figur 9 in einer Ansicht auf die Stirnseite des Profils 1 von unten dargestellt.

Die beiden Linien mit den Bezugsziffern 1001 und 1002 bezeichnen den oberen und den unteren Schenkel des U-förmigen Profils des Dichtelements 401. Es ist dort zu sehen, dass die rohrförmige Dichtung 404 in dem Bereich des Profils 1 entsprechend stärker zusammengedrückt wird als in den Bereichen, in denen die Unterseite eines Flächenelementes auf der rohrförmigen Dichtung 404 aufliegt.

Figur 11 zeigt, dass die Silikondichtungen 9 und 10 gegenüber dem Profil 1 am oberen Ende verkürzt sind. Diese Verkürzung ist so ausgestaltet, dass der untere Schenkel des U-förmigen Teils des Dichtelements 401 gerade an den Silikondichtungen 9 und 10 anliegt. Indem diese Dichtung gerade aneinander anstoßen ergibt sich eine gute Dichtung, durch die ein Eindringen von Wasser praktisch vollständig verhindert wird. Sofern an dieser Stelle doch Wasser eintritt, wird dieses über den Kanal 2 abgeführt.

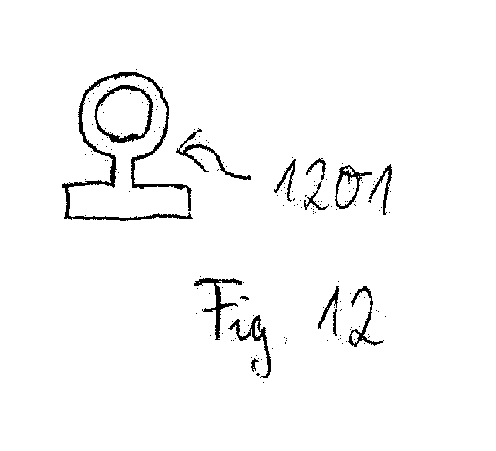

Figur 12 zeigt eine alternative Ausgestaltung der Silikondichtungen 9, 10 der Darstellung der Figur 1. Es ist zu sehen, dass diese Silikondichtung 1201 ein Unterteil aufweist, durch das die Silikondichtung 1201 wiederum zwischen den Wänden 6 und 8 sowie 5 und 7 gehalten wird. Oberhalb dieser Wände verläuft wieder ein rohrförmiges Silikonstück, das durch die Gewichtskraft des seitlich aufliegenden Flächenelementes verformt wird und dadurch die dichtende Wirkung entfaltet. Wie im Zusammenhang mit dem Ausführungsbeispiel der Dichtung nach Figur 4 erläutert, kann die Silikondichtung 1201 auf der Oberseite wieder eine oder mehrere Längsrillen aufweisen. Ebenso kann der rohrförmige Hohlraum dieser Dichtung 1201 nach dem Auflegen der Flächenelemente zumindest bereichsweise ausgespritzt werden. Ebenso können in dem rohrförmigen Hohlraum - wie im Zusammenhang mit Figur 4 beschrieben - eine oder mehrere Stabilisierungstraversen vorhanden sein. Alternativ oder zusätzlich ist es sowohl bei der Dichtung nach Figur 4 sowie auch bei der Dichtung nach Figur 12 möglich, den rohrförmigen Innenteil der Dichtung mit einem weichelastischen und verformbaren Material zu füllen. Dadurch bleibt vorteilhaft die dichtende Wirkung erhalten, weil sich das rohrförmige Teil der Dichtung nach wie vor entsprechend verformen lässt. Gleichzeitig wird die Formstabilität verbessert, so dass durch eventuell auftretende Scherkräfte beim Auflegen der Flächenelemente das Dichtelement seine Form besser behält in dem Sinne, dass das rohrförmige Teil gleichmäßig breit gedrückt wird und nicht durch die Scherkräfte zu stark in seitlicher Richtung verformt wird.

## Patentansprüche

1. Dacheindeckung bestehend aus mehreren Flächenelementen (501, 502), wobei die Flächenelemente (501, 502) entlang horizontaler Kanten aufeinanderliegen derart, dass die in Richtung der Dachschräge oben liegenden Flächenelemente (502) im Bereich von deren unterer Kante auf den in Richtung der Dachschräge darunterliegenden Flächenelementen (501) im Bereich von deren oberer Kante überlappend aufliegen, wobei die Flächenelemente entlang deren seitlicher Kanten nebeneinander liegen, **dadurch gekennzeichnet, dass** die Flächenelemente (501, 502) im Bereich ihrer seitlichen Kanten jeweils auf einer seitlichen Wand (5, 7; 6, 8) eines nach oben offenen Kanals (2) aufliegen derart, dass der Kanal (2) unterhalb des Zwischenraumes zwischen den seitlichen Kanten benachbarter Flächenelemente (501, 502) verläuft, wobei die Auflage der seitlichen Wände (5, 7; 6, 8) des nach oben offenen Kanals (2) eine Silikondichtung (9, 10) aufweist.

2. Dacheindeckung nach Anspruch 1,
**dadurch gekennzeichnet, dass** der Kanal (2) an seinem unteren Austrittsende ein horizontal verlaufendes Anliegeprofil (201) mit einer Aufnahme für die Unterkante der Flächenelemente aufweist, wobei die Aufnahme wenigstens eine Silikondichtung (203, 204) aufweist und wobei das Anliegeprofil (201) im Bereich des Querschnitts des Kanals (2) offen ist (202).

3. Dacheindeckung nach Anspruch 1 oder 2,
**dadurch gekennzeichnet, dass** im Bereich der horizontal verlaufenden oberen Kanten auf der Oberseite der Flächenelemente (501) Dichtelemente (401) aus Silikon angebracht sind, die rohr- oder stangenförmig ausgebildet sind und innen hohl sind (404).

4. Dacheindeckung nach Anspruch 3,
**dadurch gekennzeichnet, dass** parallel zu dem rohr- oder stangenförmigen Dichtelement (401) ein nach oben offener Kanal (403) verläuft.

5. Dacheindeckung nach Anspruch 3 oder 4,
**dadurch gekennzeichnet, dass** die Dichtelemente (401, 404) im Bereich der Auflage eines darüber liegenden Flächenelementes (502) wenigstens eine Rille in Längsrichtung des Dichtelementes (401, 404) aufweisen.

6. Dacheindeckung nach einem der Ansprüche 3 bis 5,
**dadurch gekennzeichnet, dass** die Dichtelemente (401, 404) in ihrem Inneren wenigstens eine zwischen zwei Linien auf der inneren Oberfläche des Dichtelementes (401, 404) verlaufende Stabilisierungstraverse (405) aufweisen, wobei sich die beiden Linien zumindest im Wesentlichen in Längsrichtung des Dichtelementes (401, 404) erstrecken.

7. Dacheindeckung nach einem der Ansprüche 3 bis 6,
**dadurch gekennzeichnet, dass** das Dichtelement (404) auf der Außenseite eines Schenkels eines U-förmigen Profils (402) angebracht ist, wobei dieses Profil (402) ebenfalls aus Silikon besteht und wobei das U-förmige Profil (402) das Flächenelement (501) an seiner oberen horizontal verlaufenden Kante umgreift.

8. Dacheindeckung nach Anspruch 7 in weiterer Rückbeziehung zumindest auf Anspruch 4, **dadurch gekennzeichnet, dass** der nach oben offene Kanal (403) an das U-förmige Profil (402) angebracht ist.
